Europäisches Patentamt

European Patent Office

Office européen des brevets

(19)

(11) Publication number: **0 450 542 A1**

# EUROPEAN PATENT APPLICATION

(21) Application number: 91105105.0

(22) Date of filing: 28.03.91

(51) Int. Cl.⁵: **B23B 27/16, B23C 5/22**

(30) Priority: **30.03.90 US 502193**

(43) Date of publication of application:
**09.10.91 Bulletin 91/41**

(84) Designated Contracting States:
**DE FR GB IT NL SE**

(71) Applicant: **GTE VALENITE CORPORATION**
**750, Stephenson Highway P.O. Box 3950**
**Troy Michigan 48007(US)**

(72) Inventor: **Noggle, Kenneth G.**
**4436 Cedar**
**West Bloomfield, Michigan 48033(US)**

(74) Representative: **Patentanwälte Grünecker,**
**Kinkeldey, Stockmair & Partner**
**Maximilianstrasse 58**
**W-8000 München 22(DE)**

(54) **Pin lock system.**

(57) Pin lock system for retaining an insert (19) in a holder pocket (23) utilizing a blind inverted tapered hole (16), or hole with radius side wall, in the insert (19) which enlarges with depth. The smooth outer face of the insert (19) accommodates flow of chips, special form, or the adhering of other components to the surface.

FIG. 1

EP 0 450 542 A1

## BACKGROUND OF THE INVENTION

Cutting inserts with central through holes retained on a holder by various forms of locking pins are known in the art; for example, as disclosed in U.S. Patents: 3,490,117 to Hertel; 4,632,593 to Stashko; 3,540,102 to Yogus et al; 3,357,080 to Milewski; 3,316,616 to Milewski; and 4,615,650 to Hunt. The last patent represents the closest known prior art relative to the present invention. Typically the insert is retained against the bottom seat and one or two shoulders of the holder with the locking pin leveraged through an actuating screw to press the insert against the retaining surfaces. It is also typical of such prior art that an exposed hole opening remains at the outer face of the insert, even though the head of the locking pin is entirely submerged below the outer insert face.

## BRIEF DESCRIPTION OF THE PRESENT INVENTION

There has been an existing need for a pin lock system to hold a positive shaped insert in a pocket, both against the pocket walls and the floor of the pocket, without a hole extending through to the outer face, in order to thereby enhance a smooth flow of chips, or for the use of an uninterrupted form in the outer face, or for adhering other overlay components to that surface. Such need is met by the construction disclosed herein of an insert with a central blind inverted tapered hole or radiused side wall hole which enlarges with depth. When combined with a lock pin having a projecting lip engaging the tapered or radiused side wall with backward or downward movement produced by a set screw, the lock pin holds the insert in position.

## BRIEF DESCRIPTION OF THE DRAWINGS

Fig. 1 is a fragmentary sectional view of the cutting end of a holder employing the present pin lock system;
Fig. 2 is a fragmentary perspective exploded view of the holder illustrated in Fig. 1; and
Fig. 3 is a fragmentary sectional view of an alternative embodiment.

## DETAILED DESCRIPTION OF PREFERRED EMBODIMENT

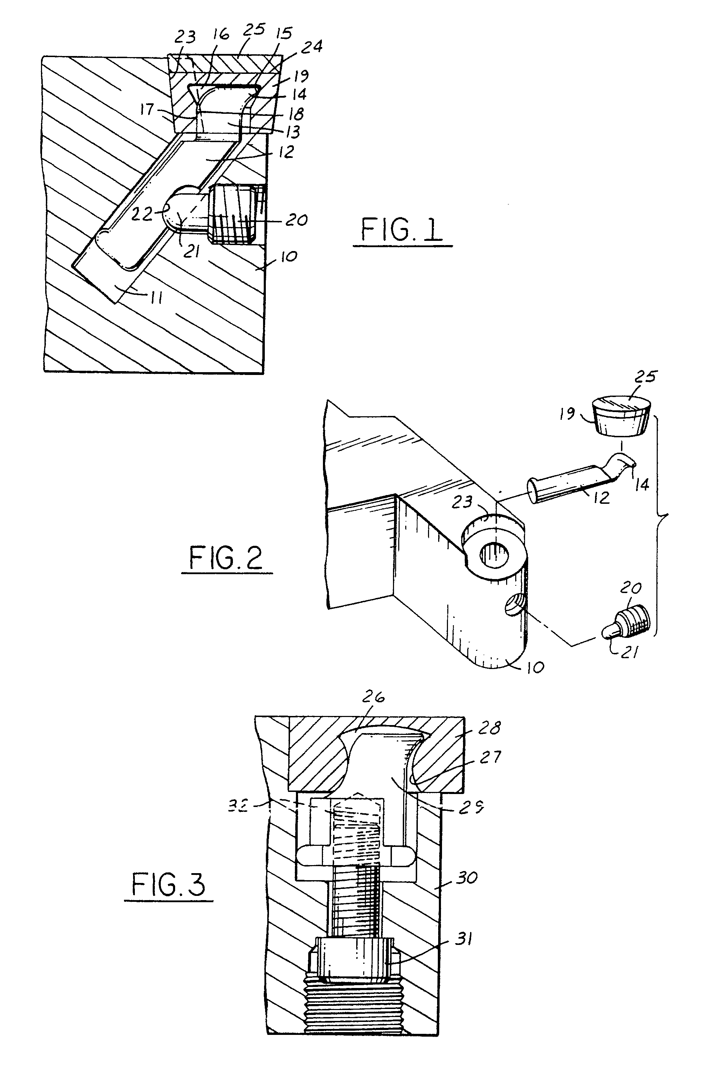

With reference to Figs. 1 and 2, holder 10 is provided with oblique angular blind hole 11 for lock pin 12 having its head 13 formed with projecting lip 14 engaging conical surface 15 of blind inverted tapered hole 16 and with neck surface 17 engaging cylindrical wall opening 18 of insert 19. Set screw 20 having rounded nose 21 engaging lock pin, recess 22 forces lock pin 12 downward and backward to clamp insert 19 in conical holder pocket 23. Optionally, unbroken outer planar face 24 of insert 19 may be provided with a bonded ceramic overlay 25 or other wear resistant cutting material. The positive insert, illustrated in the form of a conical frustum, may be indexed by simply loosening set screw 20 and may be initially installed or replaced by further backing off set screw 20 to accommodate withdrawal of lock pin 12.

With reference to Fig. 3, an alternative form of insert blind hole 26, having an arcuate wall 27, is provided in a neutral insert 28 with lock pin 29 similar to that disclosed in U.S. Patent 4,615,650 adapted to clamp the insert against bottom and side pocket walls in holder 30 when drawn down by tightening headed screw 31 engaging threaded hole 32 in lock pin 29.

Either form of inverted blind hole formed in the inserts illustrated in Figs. 1-3 can be machined by suitable boring process or by other appropriate means for forming enlarged internal cavities.

## Claims

1. Pin lock system for insert retention in tool holder pocket having insert pocket seat and side wall surfaces, comprising central blind hole in insert entering from seated side, locking pin hole in holder, locking pin means reactively interengaging walls in said respective holes, and pin lock actuating means in said holder.

2. Pin lock system of claim I wherein said blind hole is enlarged within its entrance.

3. Pin lock system of claim I wherein said blind hole is formed with inverted tapered surface.

4. Pin lock system of claim I wherein said blind hole is formed with inverted conical surface.

5. Blind hole system of claim 3 wherein said blind hole is formed with cylindrical entrance.

6. Pin lock system of claim 2 wherein said blind hole is formed with a curved wall enlarging with depth of hole.

7. Pin lock system of claim 2 wherein said locking pin hole enters the holder at an obliqe angle from said seat surface.

8. Pin lock system of claim 2 wherein said locking pin means includes a projecting lip for applying a retaining force on an enlarged surface of said insert hole.

9. Pin lock system of claim 4 wherein said locking pin means includes a projecting lip for applying a retaining force on an enlarged surface of said insert hole in a seat surface engaging direction, and includes a secondary surface on the head of said insert for exerting a side wall surface directed force on the entrance of said insert hole.

10. Pin lock system of claim 2 wherein said insert is formed as a conical frustum engaging a matching frustum segment side wall surface in said holder.

11. Pin lock system of claim 10 including a smooth unbroken planar outer face on said insert.

12. Pin lock system of claim 10 including an overlay of hard cutting material bonded to said planar surface.

13. Pin lock system of claim 2 including locking pin hole extending normal to said seat surface, a threaded hole in said locking pin means, and a shouldered screw seated in said holder for engaging said threaded hole to actuate said pin lock system.

14. Pin lock system of claim 6 including an actuating set screw, and a recess in the side of said locking pin means engaged by said set screw, providing pin lock actuating means.

FIG. 1

FIG. 2

FIG. 3

## DOCUMENTS CONSIDERED TO BE RELEVANT

EP 91105105.0

| Category | Citation of document with indication, where appropriate, of relevant passages | Relevant to claim | CLASSIFICATION OF THE APPLICATION (Int. Cl.5) |
|---|---|---|---|
| X | DE - A - 2 000 946 (HERTEL) * Fig. 6,7,8; 1,2,3 * | 1 | B 23 B 27/16 B 23 C 5/22 |
| A | | 5,7,8, 9,11, 14 | |
| A | US - A - 3 355 786 (HARGREAVES) * Fig. 1,2,3 * | 1,6,8, 11 | |
| D,A | US - A - 4 632 593 (STASHKO) * Fig. 1-4 * | 1,2,3, 4,5,6, 8,9, 10,14 | |
| D,A | US - A - 4 615 650 (HUNT) * Fig. 1-6 * | 1,2,3, 4,8,9, 13 | |
| D,A | US - A - 3 490 117 (HERTEL) * Fig. 1-7 * | 1,2,3, 4,7,8, 9,14 | TECHNICAL FIELDS SEARCHED (Int. Cl.5)  B 23 B 27/00 B 23 C 5/00 |
| D,A | US - A - 3 316 616 (MILEWSKI) * Fig. 1-3 * | 1,7,14 | |

The present search report has been drawn up for all claims

| Place of search | Date of completion of the search | Examiner |
|---|---|---|
| VIENNA | 31-05-1991 | BRÄUER |